# EUROPÄISCHE PATENTANMELDUNG

(11) **EP 1 179 960 A1**
(43) Veröffentlichungstag der Anmeldung: **13.02.2002**
(21) Anmeldenummer: 00117117.2
(22) Anmeldetag: 10.08.2000
(51) Int. Cl.: H04Q 7/22, H04L 12/58

(54) **Verfahren zur datenaustauschenden Kommunikation zwischen einem Netzwerkdienst eines IP-Netzwerkes und einem Mobilfunknetzwerk**

(71) Anmelder: TLC Transport-, Informatik- u. Logistik-Consulting GmbH, 10179 Berlin (DE)
(72) Erfinder: Altaner, Bertold, 69469 Weinheim (DE); Beuttler, Jürgen, 63225 Langen (DE); Stroborn, Hardy, 55452 Windesheim (DE); Wang, Hao, 60431 Frankfurt/Main (DE)
(74) Vertreter: Stenger, Watzke & Ring Patentanwälte

(57) **Zusammenfassung**

Die vorliegende Erfindung betrifft ein Verfahren zur datenaustauschenden Kommunikation zwischen einem Netzwerkdienst eines IP-Netzwerkes (5) und einem Mobilfunknetzwerk (D1, D2), wobei seitens eines wenigstens eine Schnittstelle (2, 3, 4) zur Anbindung an ein Netzwerkdienst des IP-Netzwerkes (5) umfassenden Steuersystems (1) eine Anbindung an wenigstens einen Netzwerkdienst des IP-Netzwerkes (5) erfolgt und seitens eines wenigstens eine Schnittstelle zur Anbindung an ein Mobilfunknetzwerk (D1, D2) umfassenden Routers (10) eine Anbindung an wenigstens ein Mobilfunknetzwerk (D1, D2) erfolgt, wobei das Steuersystem (1) und der Router (10) über eine IP-Verbindung miteinander verbunden sind und der Router (10) im Rahmen der Kommunikation auszutauschende Daten von einem IP-Netzwerk-Format in ein Mobilfunknetzwerk-Format bzw. von einem Mobilfunknetzwerk-Format in ein IP-Netzwerk-Format umsetzt.

## Beschreibung

Die vorliegende Erfindung betrifft ein Verfahren zur datenaustauschenden Kommunikation zwischen einem Netzwerkdienst eines IP-Netzwerkes (IP: Internet Protocol) und einem Mobilfunknetzwerk.

Im Rahmen der modernen Kommunikation stehen für einen Daten- bzw. Informationsaustausch verschiedene Kommunikationsmittel und -medien zur Verfügung. Neben der steigenden Anzahl der das Internet und dessen Dienste wie World Wide Web, E-Mail, FTP und dergleichen nutzenden Anwender nimmt die Zahl der Mobilfunknetze verwendenden Nutzer stetig zu. Die Mobilfunknetze werden dabei nicht nur zur drahtlosen mobilen Telefonie verwendet, sondern zunehmend auch für den Austausch von Textdaten im Rahmen des sogenannten Short-Message-Service (SMS) sowie als Übertragungsmedium für verschiedenste Meldesysteme, beispielsweise Einbruch- und Diebstahlsicherungen, Feuer- und Brandmeldeeinrichtungen, Fernwart- und Bedienungssysteme der verschiedensten Art, und dergleichen.

Seitens der Mobilfunknetze und der IP-Netzwerke werden dabei unterschiedliche Kommunikationsprotokolle eingesetzt. Seitens der Mobilfunknetzwerke, wie die in der Bundesrepublik Deutschland verbreiteten Netze D1, D2 und E-Plus, wird dabei ein Übertragungsprotokoll der X-Serie zur Datenübertragung verwendet, wobei die Mobilfunknetze untereinander GSM nutzen. Die X-Serie geht auf Empfehlungen der CCITT zurück und behandelt Probleme der Datenübertragung über öffentliche Datenübermittlungsnetze. Seitens der IP-Netzwerke werden Übertragungsprotokolle wie TCP (Transmission Control Protocol) über IP (Internet Protocol) verwendet.

Ein Datenaustausch zwischen den Mobilfunknetzen und den IP-Netzen zur umfassenden netzwerkübergreifenden Kommunikation ist bisher aufgrund der unterschiedlichen Übertragungsprotokolle seitens der Mobilfunknetze und der IP-Netze erschwert bzw. mit erheblichem Kostenaufwand verbunden, da bspw. die IP-Netzwerke und deren Endgeräte jeweils mit Schnittstellen zur Realisierung der Übertragungsprotokolle der Mobilfunknetze versehen werden müssen.

Der Erfindung liegt in Anbetracht dieses Standes der Technik die Aufgabe zugrunde, ein Verfahren der eingangs genannten Art bereitzustellen, welches auf kostengünstige Art und Weise einen Datenaustausch zwischen IP-Netzwerken und Mobilfunknetzwerken ermöglicht.

Die Aufgabe wird erfindungsgemäß gelöst durch ein Verfahren zur datenaustauschenden Kommunikation zwischen einem Netzwerkdienst eines IP-Netzwerkes und einem Mobilfunknetzwerk, wobei seitens eines wenigstens eine Schnittstelle zur Anbindung an einen Netzwerkdienst des IP-Netzwerkes umfassenden Steuersystems eine Anbindung an wenigstens einen Netzwerkdienst des IP-Netzwerkes erfolgt und seitens eines wenigstens eine Schnittstelle zur Anbindung an ein Mobilfunknetzwerk umfassenden Routers eine Anbindung an wenigstens ein Mobilfunknetzwerk erfolgt, wobei das Steuersystem und der Router über eine IP-Verbindung miteinander verbunden sind und der Router im Rahmen der Kommunikation auszutauschende Daten von einem IP-Netzwerk-Format in ein Mobilfunknetzwerk-Format bzw. von einem Mobilfunknetzwerk-Format in ein IP-Netzwerk-Format umsetzt.

Vorteilhafterweise tauscht der Router dabei den sogenannten IP-Header aus, so daß keine Nutzdaten umgesetzt werden müssen.

Erfindungsgemäß wird durch den dem Steuersystem bzw. dem Mobilfunknetz vorgelagerten Router, welcher die Protokollumsetzung von einem IP-Netzwerk-Format in ein Mobilfunknetzwerk-Format bzw. von einem Mobilfunknetzwerk-Format in ein IP-Netzwerk-Format realisiert, eine kostengünstige Möglichkeit für eine datenaustauschende Kommunikation zwischen den Netzwerkdiensten eines IP-Netzwerkes und einem Mobilfunknetzwerk bereitgestellt. Erfindungsgemäß lassen sich so vorteilhafterweise Daten zwischen den Netzwerkdiensten des IP-Netzwerkes, besonders bevorzugt SMTP-Mail (Simple Mail Transfer Protocol-Mails) und/oder Lotus-Notes-Mails, und den Mobilfunknetzen, vorteilhafterweise den sogenannten Short-Message-Services (SMS) austauschen. So kann bspw. eine E-Mail über das IP-Netzwerk, das Steuersystem, welches an dem IP-Netzwerk angeschlossen ist, dem Router und dem Mobilfunknetz an ein Mobilfunknetzendgerät, bspw. einem sogenannten Handy, gesandt werden bzw. in umgekehrter Reihenfolge von einem Mobilfunknetzendgerät eine E-Mail an ein an das IP-Netzwerk angeschlossenes Endgerät.

Gemäß einer vorteilhaften Ausgestaltung der Erfindung ist es darüberhinaus möglich Daten über den Router und das Steuersystem des IP-Netzwerkes zwischen den verschiedenen Mobilfunknetzen, bspw. dem D1-Netz und dem D2-Netz, auszutauschen.

Gemäß einer weiteren vorteilhaften Ausgestaltung der Erfindung wird als Router ein Router der Firma Cisco verwendet, der durch eine spezielle Konfiguration eine Protokollumsetzung von X.25 auf IP realisiert, wobei der IP-Header ausgetauscht wird, so daß eine Nutzdatenumsetzung entbehrlich ist.

Weitere Einzelheiten, Merkmale und Vorteile der Erfindung werden nachfolgend anhand des in der Fig. dargestellten Ausführungsbeispiels näher erläutert. Dabei zeigt:

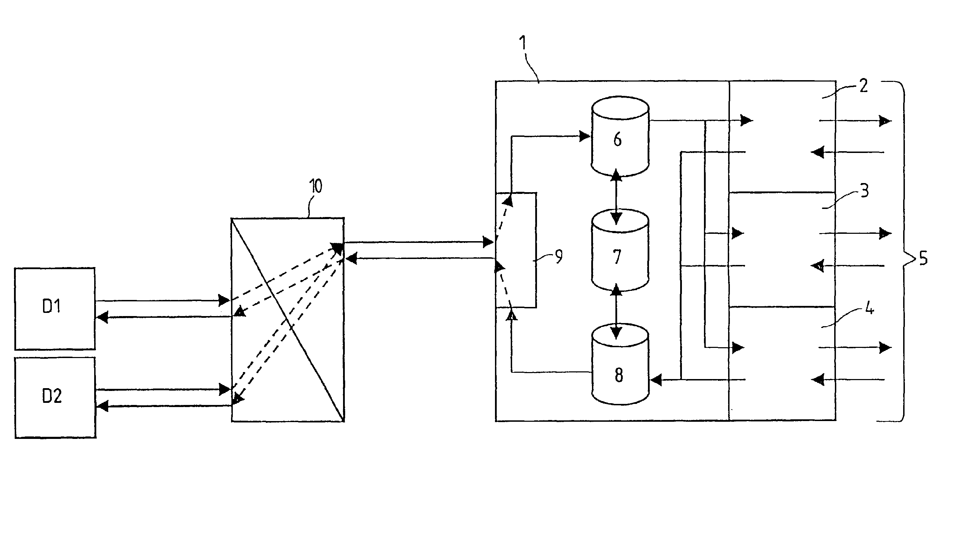

- Fig. 1: eine Prinzipdarstellung der datenaustauschenden Kommunikation gemäß dem erfindungsgemäßen Verfahren.

Fig. 1 zeigt in einem Blockdiagramm den prinzipiellen Aufbau der Kommunikation für einen Datenaustausch zwischen einem Netzwerkdienst eines IP-Netzwerkes und einem Mobilfunknetzwerk.

Das Steuersystem 1 weist drei Schnittstellen 2, 3 und 4 auf. Die Schnittstellen 2 und 3 dienen dabei der Anbindung an einen der Netzwerkdienste eines hier mit 5 gekennzeichneten IP-Netzwerkes. Die Schnittstelle 2 ist dabei als Mail-Schnittstelle für SMTP-Mails (Simple Mail Transfer Protocol-Mails) und die Schnittstelle 3 als Mail-Schnittstelle für Lotus-Notes-Mails ausgebildet. Die Schnittstelle 4 des Steuersystems 1 dient zur Anbindung an das IP-Netzwerk 5 über TCP/IP (Transmission Control Protocol/Internet Protocol).

Das Steuersystem 1 weist desweiteren drei Speicherbereiche 6, 7 und 8 auf. Im Speicherbereich 6, der sogenannten "Inbox" werden an ein Endgerät im IP-Netzwerk 5, bspw. eine E-Mail-Adresse, zu sendende Daten gespeichert, die sowohl über das IP-Netzwerk 5 als auch seitens des Mobilfunknetzwerkes D1, D2 gesendet worden sein können, wie nachfolgend noch zu erläutern. Der Speicherbereich 7, die sogenannte "Routing-Tabelle" umfaßt die zur Ansteuerung entsprechenden Endgeräte seitens des IP-Netzwerkes 5 oder seitens des Mobilfunknetzwerkes D1, D2 erforderlichen Adressdaten der Endgeräte. Die Adressdaten in der "Routing-Tabelle" 7 umfassen dabei entweder die direkte Adresse des zum Datenaustausch anzusprechenden Endgerätes seitens des IP-Netzwerkes 5 oder seitens des Mobilfunknetzwerkes D1, D2, oder aber die Adresse eines weiteren als "Routing-Tabelle" dienenden Speicherbereichs im IP-Netzwerk 5, in welchem die direkte Adresse des anzusteuernden Endgerätes gespeichert ist.

Der Speicherbereich 8, die sogenannte "Outbox" dient zur Speicherung seitens des Steuersystems 1 auszusendender Daten, sei es an Endgeräte seitens des IP-Netzwerkes 5 oder des Mobilfunknetzwerkes D1, D2, wie nachfolgend noch näher zu erläutern. Seitens des Steuersystems 1 und des IP-Netzwerkes 5 wird zur Kommunikation ein Internet-Protokoll (IP) verwendet. Dieses Internet-Protokoll wird seitens der Umsetzeinrichtung 9 des Steuersystems 1 in ein Protokoll höherer Ebene, vorliegend UCP (Universal Computer Protocol) umgesetzt, wobei die auszutauschenden Nutzdaten beibehalten werden und lediglich der IP-Header seitens des Routers 10 ausgetauscht wird, sofern seitens des Steuersystems 1 Endgeräte außerhalb des IP-Netzwerkes 5, d.h. seitens des Mobilfunknetzwerkes D1, D2 zum Datenaustausch angesprochen werden. Die entsprechend seitens der Umsetzeinrichtung 9 auf UCP umgesetzten Daten werden dem Router 10, vorliegend ein Router der Firma Cisco, zugeführt, welcher die in UCP über IP zugeführten Daten umwandelt in UCP über X.25-Daten, welche schließlich den jeweiligen Mobilfunknetzwerken, vorliegend dem D1- bzw. D2-Netz zugeführt werden.

Die von dem Steuersystem 1 ausgehenden Datensätze in Form von IP-Paketen werden im Router 10 in X.25-Pakete umgewandelt, die in den Mobilfunknetzen D1 und D2 unmittelbar weiterverarbeitbar sind. So lassen sich seitens des Steuersystems 1 zwischen einem IP-Netzwerk 5 und einem Mobilfunknetzwerk D1, D2 Textdaten im sogenannten SMS-Format (Short Message Service-Format) austauschen.

In analoger Weise lassen sich entsprechende Daten seitens des Mobilfunknetzwerkes D1 bzw. D2 über den Router 10 an das Steuersystem 1 und damit in das IP-Netzwerk 5 weiterleiten. Darüberhinaus ist es möglich entsprechende Daten über den Router 10 und das Steuersystem 1 von einem Mobilfunknetzwerk, bspw. dem D1-Netz, in ein anderes Mobilfunknetzwerk, bspw. das D2-Netz, zu versenden.

### Bezugszeichenliste

- 1: Steuersystem
- 2: Schnittstelle SMTP-Mail
- 3: Schnittstelle Lotus-Notes-Mail
- 4: Schnittstelle TCP/IP
- 5: IP-Netzwerk
- 6: Speicherbereich "Inbox"
- 7: Speicherbereich "Routing-Tabellle"
- 8: Speicherbereich "Outbox"
- 9: Umsetzeinrichtung
- 10: Router

- D1: Mobilfunknetzwerk
- D2: Mobilfunknetzwerk

## Patentansprüche

1. Verfahren zur datenaustauschenden Kommunikation zwischen einem Netzwerkdienst eines IP-Netzwerkes (5) und einem Mobilfunknetzwerk (D1, D2), wobei seitens eines wenigstens eine Schnittstelle (2, 3, 4) zur Anbindung an ein Netzwerkdienst des IP-Netzwerk (5) umfassenden Steuersystems (1) eine Anbindung an wenigstens einen Netzwerkdienst des IP-Netzwerkes (5) erfolgt und seitens eines wenigstens eine Schnittstelle zur Anbindung an ein Mobilfunknetzwerk (D1, D2) umfassenden Routers (10) eine Anbindung an wenigstens ein Mobilfunknetzwerk (D1, D2) erfolgt, wobei das Steuersystem (1) und der Router (10) über eine IP-Verbindung miteinander verbunden sind und der Router (10) im Rahmen der Kommunikation auszutauschende Daten von einem IP-Netzwerk-Format in ein Mobilfunknetzwerk-Format bzw. von einem Mobilfunknetzwerk-Format in ein IP-Netzwerk-Format umsetzt.

2. Verfahren nach Anspruch 1, **dadurch gekennzeichnet, daß** der Router (10) beim Umsetzen den IP-Header austauscht.

3. Verfahren nach Anspruch 1 oder Anspruch 2, **dadurch gekennzeichnet, daß** das IP-Netzwerk-Format TCP/IP ist und

4. Verfahren nach einem der Ansprüche 1 bis 3, **dadurch gekennzeichnet, daß** die Schnittstelle (2) eine SMTP-Mail-Schnittstelle ist.

5. Verfahren nach einem der Ansprüche 1 bis 4, **dadurch gekennzeichnet, daß** die Schnittstelle (3) eine Lotus-Notes-Mail-Schnittstelle ist.

6. Verfahren nach einem der Ansprüche 1 bis 5, **dadurch gekennzeichnet, daß** die Schnittstelle (4) eine TCP/IP-Schnittstelle ist.

7. Verfahren nach einem der Ansprüche 1 bis 6, **dadurch gekennzeichnet, daß** der Router (10) zur Kommunikation mit dem Steuersystem (1) ein Protokoll höherer Ebene verwendet, vorzugsweise UCP über IP, wobei der Router (10) besonders bevorzugt als Protokoll X.25 verwendet und UCP-Daten in X.25 packt.

8. Verfahren nach einem der Ansprüche 1 bis 7, **dadurch gekennzeichnet, daß** der Router (10) zur Kommunikation mit dem Mobilfunknetzwerk (D1, D2) ein Protokoll höherer Ebene verwendet, vorzugsweise UCP über X.25.

9. Verfahren nach einem der Ansprüche 1 bis 8, **dadurch gekennzeichnet, daß** das Steuersystem (1) wenigstens eine Einrichtung (6, 7, 8) für ein Routing innerhalb des IP-Netzwerkes (5) oder des Mobilfunknetzwerkes (D1, D2) aufweist.
